# EUROPÄISCHE PATENTSCHRIFT

(11) **EP 2 528 767 B1**
(45) Veröffentlichungstag und Bekanntmachung des Hinweises auf die Patenterteilung: **31.12.2014**
(21) Anmeldenummer: 11701642.8
(22) Anmeldetag: 19.01.2011
(51) Int. Cl.: B60R 16/033, H02J 7/14, H02J 7/00, B60L 1/02, B60L 1/00, B60L 11/18, H02J 1/08, H02J 1/00, B60R 25/00, H01M 10/0525

(54) **BATTERIESYSTEM FÜR MIKRO-HYBRIDFAHRZEUGE MIT HOCHLEISTUNGSVERBRAUCHERN**
BATTERY SYSTEM FOR MICRO-HYBRID VEHICLES COMPRISING HIGH-EFFICIENCY CONSUMERS
SYSTÈME DE BATTERIE POUR VÉHICULES MICRO-HYBRIDES À CONSOMMATEURS DE FORTE PUISSANCE

(30) Priorität: 27.01.2010 DE 102010001243
(43) Veröffentlichungstag der Anmeldung: 05.12.2012
(73) Patentinhaber: Samsung SDI Co., Ltd., Gyeonggi-do (KR); Robert Bosch GmbH, 70442 Stuttgart (DE)
(72) Erfinder: FETZER, Joachim, 73342 Bad-Ditzenbach (DE); BUTZMANN, Stefan, 71717 Beilstein (DE); FINK, Holger, 70567 Stuttgart (DE)
(74) Vertreter: Bee, Joachim
(86) Internationale Anmeldenummer: PCT/EP2011/050673
(87) Internationale Veröffentlichungsnummer: WO 2011/092090

(56) Entgegenhaltungen:
- EP-A1- 1 780 864
- WO-A1-02/066293
- WO-A1-2009/047103
- DE-C1- 19 846 319
- SU G-J ET AL: "A low cost, triple-voltage bus DC-DC converter for automotive applications", APPLIED POWER ELECTRONICS CONFERENCE AND EXPOSITION, 2005. APEC 2005. TWENTIETH ANNUAL IEEE AUSTIN, TX, USA 6-10 MARCH 2005, PISCATAWAY, NJ, USA,IEEE, US, Bd. 2, 6. März 2005 (2005-03-06), Seiten 1015-1021VOL.2, XP010809360, DOI: DOI:10.1109/APEC.2005.1453116 ISBN: 978-0-7803-8975-5

## Beschreibung

Die Erfindung geht von Batteriesystemen für Kraftfahrzeuge aus, welche eine Vielzahl verschiedenartiger elektrischer Verbraucher mit einer einheitlichen Betriebsspannung versorgen. Gegenstand der Erfindung ist außerdem ein Kraftfahrzeug mit einem entsprechenden Batteriesystem.

### Stand der Technik

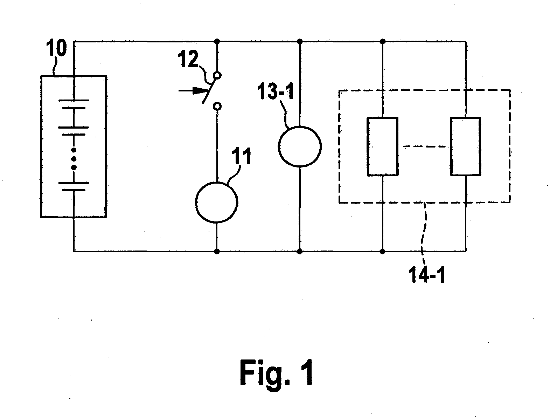

In Kraftfahrzeugen mit Verbrennungsmotor wird zur Versorgung des elektrischen Anlassers oder Starters für den Verbrennungsmotor sowie weiterer elektrischer Vorrichtungen des Kraftfahrzeuges ein so genanntes Bordnetz vorgesehen, welches standardmäßig mit 14V betrieben wird (siehe Fig. 1). Beim Starten des Verbrennungsmotors (nicht dargestellt) wird eine vom Ladezustand einer für die Versorgung vorgesehenen Starterbatterie 10 abhängige Spannung über das Bordnetz einem Starter 11 zur Verfügung gestellt, welcher den Verbrennungsmotor startet (im Beispiel der Fig. 1: wenn durch ein entsprechendes Startersignal der Schalter 12 geschlossen wird). Ist der Verbrennungsmotor gestartet, treibt dieser einen elektrischen Generator 13-1 ("Lichtmaschine") an, welcher dann eine Spannung von etwa 14V erzeugt und über das Bordnetz den verschiedenen elektrischen Verbrauchern 14-1 im Kraftfahrzeug zur Verfügung stellt. Der elektrische Generator 13-1 lädt dabei auch die durch den Startvorgang belastete Starterbatterie 10 wieder auf.

Es steht zu erwarten, dass so genannte Mikro-Hybrid-Kraftfahrzeuge in der nächsten Zukunft weite Verbreitung erfahren werden. Diese Klasse von Kraftfahrzeugen besitzt im Gegensatz zu "reinen" Hybrid-Kraftfahrzeugen für den Antrieb ausschließlich einen Verbrennungsmotor. Dennoch sind Vorrichtungen zur Rückgewinnung von kinetischer Energie (Rekuperation), beispielsweise beim Bremsen, vorgesehen, die so in elektrischer Form zurückgewonnene Energie wird jedoch nicht für den Antrieb, sondern u. a. für eine Start-Stopp-Automatik und sonstige elektrische Subsysteme verwendet, um den vom Verbrennungsmotor betriebenen elektrischen Generator möglichst selten einsetzen zu müssen, was die Belastung des Verbrennungsmotors und damit dessen Kraftstoffverbrauch reduziert.

Heute bereits in Serienproduktion befindliche Mikro-Hybrid-Kraftfahrzeuge haben allerdings massive Probleme hinsichtlich der Lebensdauer der üblicherweise verwendeten Blei-Säure-Batterien, da diese im Vergleich zu klassischen Kraftfahrzeugen mit erheblichem zusätzlichen Ladungsdurchsatz beaufschlagt werden. Grund hierfür ist, dass die elektrischen Verbraucher während der Stopp-Phasen, in denen der Verbrennungsmotor ausgeschaltet wird, aus der Batterie versorgt werden müssen. Andererseits wird die auf diese Weise schneller entladene Batterie während der verhältnismäßig kurzen Phasen der Rekuperation wieder aufgeladen, was wiederum eine Belastung der Batterie darstellt. Dies führt dazu, dass die Batterien in Mikro-Hybrid-Fahrzeugen teilweise eine Lebensdauer von zwei Jahren unterschreiten. Der häufig erforderliche Batterietausch führt zu Problemen bei der Zuverlässigkeit der Kraftfahrzeuge und zu Verärgerung bei den Kunden.

Ein weiteres Problem bei zeitgemäß ausgestatteten Kraftfahrzeugen ist, dass bei einem bei 14V betriebenen Bordnetz die Versorgung von elektrischen Hochleistungsverbrauchern wie beispielsweise elektrischen Klimakompressoren oder elektrischen Heizsystemen problematisch ist, weil diese Verbraucher aufgrund der verhältnismäßig niedrigen Spannung mit sehr hohen Strömen gespeist werden müssen, um die erforderliche Leistung zur Verfügung stellen zu können.

Aus der EP 1780864 A1 ist eine Vorrichtung zum zuverlässigen Antreiben eines Motors bekannt, wobei die Vorrichtung eine erste Spannungsauelle, eine Schaltung zur Erfassung einer zugeführten Leistung der ersten Spannungsquelle und einer Ansteuerung des Motors, eine zweite Spannungsquelle, die durch eine niedrigere Gleichspannung, als die erste Spannungsquelle bereitstellt, aufgeladen wird, einen Spannungswandler, der die Gleichspannung des ersten Spannungsquelle in die niedrigere Gleichspannung der zweiten Spannungsquelle umrichetet und eine Steuervorrichtung für den Umrichter.

Aus der WO 02/066293 A1 ist ein Kraftfahrzeug-Bordnetz mit einer Kombination von Doppelschichtkondensatoren und Blei-Säure-Akkumulatoren bekannt, welches ohne kostenintensiven bidirektionalen Gleichspannungswander auskommt und damit die Systemkosten erheblich senkt.

Der Artikel "A Low Cost, Triple-Voltage Bus DC-DC Converter for Automotive Applications" von Gui-Jia Su et al., Applied Power Electronics Conference and Exposition 2005 offenbart einen kostengünstigen, elektronisch geschalteten und für hohe Schaltfrequenzen geeigneten, bidirektionalen DC-DC-Wandler, welcher drei Spannungsnetze miteinander verbindet.

WO 2009/047103 A1 offenbart ein Bordnetz, welches ein Starternetz mit einem Hochleistungsverbraucher aufweist, ein Zwischennetz mit einem zweiten Energiespeicher, ein Verbrauchernetz mit zumindest einem elektrischen Verbraucher, wobei das Starternetz mit dem Zwischennetz über einen ersten Spannungswandler elektrisch gekoppelt ist, wobei das Zwischennetz mit dem Verbrauchernetz über einen zweiten Spannungswandler elektrisch gekoppelt ist und das Bordnetz eine Kontrolleinrichtung aufweist, die die elektrische Spannung im Zwischennetz in Abhängigkeit von einem Parameter des zweiten Energiespeichers steuert oder regelt.

DE 10946319 C1 offenbart eine Energieversorgungsschaltung für ein Kraftfahrzeugbordnetz mit zwei Spannungsversorgungszweigen auf unterschiedlichen Spannungsebenen, wobei der erste Spannungsversorgungszweig über einen elektrischen Gleichspannungswandler von dem zweiten Spannungsversorgungszweig und der zweite Spannungsversorgungszweig von einem Generator speisbar ist. Erfindungsgemäß wird vorgeschlagen, dass ein Mehrfachwandler W3 mit drei Spannungsebenen vorhanden ist, dessen einer Ein/Ausgang mit dem zweiten Spannungsversorgungszweig, dessen anderer Ein/Ausgang mit dem ersten Spannungsversorgungszweig und dessen dritter Ein/Ausgang mit dem ersten Spannungsversorgungszweig zugeordneten Energiespeicher B1 verbunden ist

### Offenbarung der Erfindung

Ein erster Erfindungsaspekt führt ein Batteriesystem für ein Kraftfahrzeug mit einem Verbrennungsmotor ein, wobei das Batteriesystem wenigstens einen Anlasserstromkreis, ein Niederspannungsbordnetz und ein Bordnetz mit erhöhter Spannung aufweist. Der Anlasserstromkreis verfügt über eine Anlasserbatterie und einen mit der Anlasserbatterie verbundenen oder verbindbaren Anlasser, welcher ausgebildet ist, den Verbrennungsmotor auf ein Startersignal hin zu starten. Das Niederspannungsbordnetz verfügt über eine Bordnetzbatterie, welche ausgebildet ist, eine erste Spannung zu erzeugen und an das Niederspannungsbordnetz auszugeben, und wenigstens einen elektrischen Verbraucher. Das Bordnetz mit erhöhter Spannung verfügt über wenigstens einen elektrischen Generator, welcher von dem Verbrennungsmotor betreibbar und ausgebildet ist, eine zweite Spannung, welche höher als die erste Spannung ist, zu erzeugen und an das Bordnetz mit erhöhter Spannung auszugeben. Das Bordnetz mit erhöhter Spannung ist mit dem Niederspannungsbordnetz über eine erste Koppeleinheit verbunden, welche ausgebildet ist, dem Bordnetz mit erhöhter Spannung elektrische Energie zu entnehmen und dem Niederspannungsbordnetz zuzuführen. Das Niederspannungsbordnetz ist mit dem Anlasserstromkreis über eine zweite Koppeleinheit verbunden, welche ausgebildet ist, dem Niederspannungsbordnetz elektrische Energie zu entnehmen und dem Anlasserstromkreis zuzuführen.

Ein erfindungsgemäßes Bordnetz bzw. Batteriesystem besitzt eine höhere Lebensdauer der eingesetzten Batterie besitzt und eignet sich besser für die Speisung von Hochleistungsverbrauchern.

Die Erfindung besitzt den Vorteil, dass durch das Niederspannungsbordnetz weiterhin elektrische Verbraucher betrieben werden können, die auf eine niedrige (erste) Spannung ausgelegt sind. Für Hochleistungsverbraucher steht jedoch das Bordnetz mit erhöhter Spannung zur Verfügung, welches aufgrund der höheren zweiten Spannung die Hochleistungsverbraucher mit geringeren Strömen versorgen kann. Zudem ist der Anlasserstromkreis vom Niederspannungsbordnetz getrennt und Anlasserstromkreis und Niederspannungsbordnetz verfügen jeweils über eine eigene Batterie, die Anlasserbatterie einerseits und die Bordnetzbatterie andererseits. Dadurch wird das Niederspannungsbordnetz stabilisiert und unempfindlicher gegenüber den aufgrund der Start-Stopp-Automatik des Mikro-Hybrid-Fahrzeuges häufigen Startvorgängen. So wird insbesondere die Spannung des Niederspannungsbordnetzes beim Starten nicht oder wenigstens deutlich weniger einbrechen, was die fehlerlose und somit zuverlässige Funktion der im Niederspannungsbordnetz betriebenen elektrischen Verbraucher sicherstellt. Der elektrische Generator ist erfindungsgemäß im Bordnetz mit erhöhter Spannung angeordnet und versorgt dieses nach erfolgtem Starten des Verbrennungsmotors mit elektrischer Energie, welche wenigstens teilweise auch dem Niederspannungsbordnetz zum Aufladen der Anlasserbatterie zugeführt werden kann. Die Anordnung des elektrischen Generators im Bordnetz mit erhöhter Spannung hat dabei den Vorteil, dass die elektrische Energie im Bordnetz mit erhöhter Spannung erzeugt wird, wo auch die Verbraucher mit der größten Leistungsaufnahme angeordnet sind. Nur ein geringer Teil der elektrischen Energie muss über die Koppeleinheit dem Niederspannungsbordnetz zugeführt werden, was den Wirkungsgrad der Gesamtanordnung verbessert. Der Anlasserstromkreis wiederum verfügt über eine gesonderte Batterie (die Anlasserbatterie), welche den Anlasser mit den für das Starten notwendigen großen Strömen ohne störende Zwischenkomponenten versorgen kann.

Besonders bevorzugt wird ein Batteriesystem, bei dem die Anlasserbatterie und/oder die Bordnetzbatterie eine Lithium-Ionen-Batterie sind/ist. Lithium-Ionen-Batterien können einen größeren Energiebetrag in einem gegebenen Volumen speichern als beispielsweise Bleibatterien. Besonders vorteilhaft ist hierbei, dass die zweite Koppeleinheit elektrische Energie aus dem Niederspannungsbordnetz nach einem erfolgten Start des Verbrennungsmotors dem Anlasserstromkreis zuführt und so als Ladegerät für die Anlasserbatterie fungiert. Die Anlasserbatterie muss in dieser bevorzugten Ausführungsform der Erfindung in besonderer Weise aufgeladen werden, weil sie als Lithium-Ionen-Batterie ausgeführt und daher empfindlich gegen Überspannungen ist. Ein weiterer Vorteil von Lithium-Ionen-Batterien ist, dass sie eine große Zahl von Ladezyklen verkraften und somit die Zuverlässigkeit eines Mikro-Hybrid-Kraftfahrzeuges vergrößern können.

Das Bordnetz mit erhöhter Spannung kann wenigstens einen Hochleistungsverbraucher, beispielsweise einen elektrischen Klimakompressor, ein elektrisches Heizsystem oder einen Elektromotor, aufweisen. Der wenigstens eine elektrische Verbraucher des Niederspannungsbordnetzes kann beispielsweise eine Musikanlage, ein Navigationsgerät oder ein elektrischer Fensterheber sein.

In einer vorteilhaften Ausführungsform der Erfindung ist eine Diode vorgesehen, deren Anode mit dem Niederspannungsbordnetz und deren Kathode mit dem Anlasserstromkreis verbunden ist. Bricht die Spannung im Anlasserstromkreis aufgrund der hohen Belastung beim Starten des Verbrennungsmotors ein, wird die Diode automatisch zu leiten beginnen und die Spannung des Anlasserstromkreises stabilisieren, indem sie die Bordnetzbatterie parallel zur Anlasserbatterie schaltet. Weil die Diode einen erheblich größeren Strom führen kann als die zweite Koppeleinheit, könnte die zweite Koppeleinheit die Spannung im Anlasserstromkreis nicht wie gewünscht stabilisieren.

Bevorzugt weist das Bordnetz mit erhöhter Spannung einen Pufferkondensator auf, welcher die vom elektrischen Generator erzeugte zweite Spannung im Bordnetz mit erhöhter Spannung glättet.

Bevorzugt sind die erste Koppeleinheit und/oder die zweite Koppeleinheit DC/DC-Konverter.

Die erste Spannung kann zwischen 10V und 15V betragen. Dieser Spannungsbereich garantiert Kompatibilität mit einer Vielzahl von im Kraftfahrzeugbau verfügbaren elektrischen Systemen. Aus demselben Grund ist die erste Spannung bevorzugt auch für den Anlasserstromkreis vorgesehen.

Die zweite Spannung beträgt bevorzugt zwischen 24V und 45V. Dieser Spannungsbereich erlaubt eine vereinfachte Versorgung von Hochleistungsverbrauchern mit der benötigten elektrischen Leistung, ohne jedoch die Spannung so weit zu heben, dass im Reparaturfall eine Gefährdung von Wartungspersonal oder im Fall eines Unfalls von Rettungspersonal oder Fahrzeuginsassen durch hohe Spannungen besteht. Indem die zweite Spannung etwa zwischen dem Doppelten bis Dreifachen der ersten Spannung beträgt, ist zudem die Kopplung des Bordnetzes mit erhöhter Spannung mit dem Niederspannungsbordnetz einfach möglich, eine Umsetzung der zweiten Spannung in die erste Spannung kann mit einem guten Wirkungsgrad erfolgen.

Ein zweiter Erfindungsaspekt betrifft ein Kraftfahrzeug mit einem Verbrennungsmotor und einem Batteriesystem gemäß dem ersten Erfindungsaspekt. Das Kraftfahrzeug ist bevorzugt als Mikro-Hybrid-Kraftfahrzeug ausgeführt.

### Zeichnungen

Die Erfindung wird im Folgenden anhand von Abbildungen von Ausführungsbeispielen näher erläutert. Gleiche oder ähnliche Bezugszeichen bezeichnen dabei gleiche bzw. ähnliche Elemente. Es zeigen:
Fig. 1 ein Batteriesystem nach dem Stand der Technik und
Fig. 2 ein Ausführungsbeispiel des erfindungsgemäßen Batteriesystems.

### Ausführungsbeispiele der Erfindung

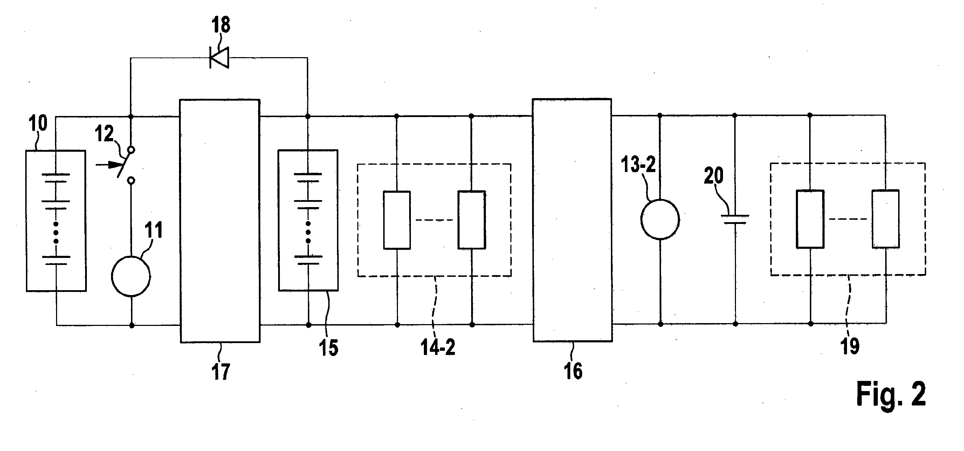

Fig. 2 zeigt ein Ausführungsbeispiel des erfindungsgemäßen Batteriesystems. Eine Anlasserbatterie 10, welche vorzugsweise als Lithium-Ionen-Batterie ausgeführt ist, versorgt einen Anlasserstromkreis mit einer Spannung von bevorzugt 10V bis 15V, wobei die genaue Spannung abhängig vom Ladezustand der Anlasserbatterie 10 ist. Mit der Anlasserbatterie 10 verbunden ist ein Anlasser 11, welcher ausgebildet ist, einen Verbrennungsmotor (nicht dargestellt) zu starten. In Serie geschaltet mit dem Anlasser 11 ist ein Schalter 12, welcher durch ein Startersignal gesteuert wird. Wird der Schalter 12 geschlossen, wird der Anlasser 11 aktiviert und ein Strom fließt von der Anlasserbatterie 10 durch den Anlasser 11. Parallel zum Anlasser 11 sind bevorzugt keine weiteren elektrischen Verbraucher vorgesehen, um die Anlasserbatterie 10 nicht zusätzlich zu belasten. Der Anlasserstromkreis ist über eine im Beispiel als DC/DC-Umsetzer ausgeführte Koppeleinheit 17 mit einem Niederspannungsbordnetz verbunden. Die Koppeleinheit 17 ist ausgebildet, dem Niederspannungsbordnetz elektrische Energie zu entnehmen und dem Anlasserstromkreis zur Verfügung zu stellen, wodurch die Anlasserbatterie 10 wieder aufgeladen wird. Optional kann eine Diode 18 vorgesehen sein, welche das Niederspannungsbordnetz mit dem Anlasserstromkreis verbindet, falls die Spannung im Anlasserstromkreis unter die Spannung des Niederspannungsbordnetzes fällt.

Das Niederspannungsbordnetz verfügt über eine eigene Batterie, die Bordnetzbatterie 15, welche vorzugsweise als Lithium-Ionen-Batterie ausgeführt und ausgebildet ist, eine Spannung von bevorzugt 10V bis 15V zu erzeugen. Im Niederspannungsbordnetz ist außerdem wenigstens ein elektrischer Verbraucher 14-2 vorgesehen, der für einen Betrieb bei der Spannung von 10V bis 15V ausgelegt ist. Beispiele für solche elektrischen Verbraucher können eine Musikanlage, ein Navigationsgerät, elektrische Fensterheber und dergleichen sein. Das Niederspannungsbordnetz ist über eine weitere, im Beispiel ebenfalls als DC/DC-Umsetzer ausgeführte Koppeleinheit 16 mit einem Bordnetz mit erhöhter Spannung verbunden. Das Bordnetz mit erhöhter Spannung wird von einem elektrischen Generator 13-2 versorgt, welcher vom (gestarteten) Verbrennungsmotor betrieben wird und ausgebildet ist, eine Spannung von bevorzugt 24V bis 45V zu erzeugen. Die weitere Koppeleinheit 16 ist ausgebildet, dem Bordnetz mit erhöhter Spannung elektrische Energie zu entnehmen und dem Niederspannungsbordnetz zuzuführen, wodurch die Bordnetzbatterie 15 aufgeladen und die für den Betrieb des wenigstens einen elektrischen Verbrauchers 14-2 erforderliche Leistung zur Verfügung gestellt wird. Das Bordnetz mit erhöhter Spannung enthält hingegen solche elektrische Verbraucher, die eine verhältnismäßig hohe elektrische Leistung aufnehmen und daher einfacher aus einer höheren, erfindungsgemäß vom elektrischen Generator 13-2 erzeugten Spannung betrieben werden, um die notwendigen Ströme zu senken. In Fig. 2 sind solche Hochleistungsverbraucher 19 beispielhaft dargestellt. Es kann sich dabei beispielsweise um elektrische Klimakompressoren oder Heizsysteme handeln. Vorzugsweise enthält das Bordnetz mit erhöhter Spannung eine Einrichtung zur Spannungsglättung, welche die Aufgabe hat, die vom elektrischen Generator 13-2 erzeugte, üblicherweise recht wellige Spannung zu glätten. Vorzugsweise ist die Einrichtung zur Spannungsglättung als Pufferkondensator 20 ausgeführt.

Selbstredend können insbesondere die erste Koppeleinheit 16 und u.U. auch die zweite Koppeleinheit 17 auch für den bidirektionalen Ladungstransport ausgebildet sein. Eine solche Ausführung der Erfindung erlaubt es, Ladung zwischen den einzelnen Batterien bzw. Bordnetzen bedarfsgerecht zu transferieren.

Die Erfindung stellt so ein Bordnetz bzw. Batteriesystem für ein Kraftfahrzeug mit Verbrennungsmotor, vorzugsweise ein Mikro-Hybrid-Kraftfahrzeug, zur Verfügung, welches sich für die Speisung von Hochleistungsverbrauchern besser eignet und eine höhere Zuverlässigkeit besitzt als Lösungen gemäß dem Stand der Technik.

## Patentansprüche

1. Ein Batteriesystem für ein Kraftfahrzeug mit einem Verbrennungsmotor, das Batteriesystem wenigstens aufweisend:
einen Anlasserstromkreis mit einer Anlasserbatterie (10) und einem mit der Anlasserbatterie (10) verbundenen oder verbindbaren Anlasser (11), welcher ausgebildet ist, den Verbrennungsmotor auf ein Startersignal hin zu starten;
ein Niederspannungsbordnetz mit einer Bordnetzbatterie (15), welche ausgebildet ist, eine erste Spannung zu erzeugen und an das Niederspannungsbordnetz auszugeben, und wenigstens einem elektrischen Verbraucher (14-2); und
ein Bordnetz mit erhöhter Spannung mit wenigstens einem elektrischen Generator (13-2), welcher von dem Verbrennungsmotor betreibbar und ausgebildet ist, eine zweite Spannung, welche höher als die erste Spannung ist, zu erzeugen und an das Bordnetz mit erhöhter Spannung auszugeben, wobei das Bordnetz mit erhöhter Spannung mit dem Niederspannungsbordnetz über eine erste Koppeleinheit (16) verbunden ist, welche ausgebildet ist, dem Bordnetz mit erhöhter Spannung elektrische Energie zu entnehmen und dem Niederspannungsbordnetz zuzuführen und wobei das Niederspannungsbordnetz mit dem Anlasserstromkreis über eine zweite Koppeleinheit (17) verbunden ist, welche ausgebildet ist, dem Niederspannungsbordnetz elektrische Energie zu entnehmen und dem Anlasserstromkreis zuzuführen.

2. Das Batteriesystem nach Anspruch 1, bei dem die Anlasserbatterie (10) und/oder die Bordnetzbatterie (15) als Lithium-Ionen-Batterie ausgeführt sind.

3. Das Batteriesystem nach einem der Ansprüche 1 oder 2, bei dem das Bordnetz mit erhöhter Spannung wenigstens einen Hochleistungsverbraucher (19), beispielsweise einen elektrischen Klimakompressor, ein elektrisches Heizsystem oder einen Elektromotor, aufweist.

4. Das Batteriesystem nach einem der vorhergehenden Ansprüche, bei dem der wenigstens eine elektrische Verbraucher (14-2) des Niederspannungsbordnetzes, beispielsweise eine Musikanlage, ein Navigationsgerät oder ein elektrischer Fensterheber ist.

5. Das Batteriesystem nach einem der vorhergehenden Ansprüche, mit einer Diode (18), deren Anode mit dem Niederspannungsbordnetz und deren Kathode mit dem Anlasserstromkreis verbunden ist.

6. Das Batteriesystem nach einem der vorhergehenden Ansprüche, bei dem das Bordnetz mit erhöhter Spannung einen Pufferkondensator (20) aufweist.

7. Das Batteriesystem nach einem der vorhergehenden Ansprüche, bei dem die erste Koppeleinheit (16) und/oder die zweite Koppeleinheit (17) DC/DC-Konverter sind.

8. Das Batteriesystem nach einem der vorhergehenden Ansprüche, bei dem die erste Spannung zwischen 10V und 15V beträgt.

9. Das Batteriesystem nach einem der vorhergehenden Ansprüche, bei dem die zweite Spannung zwischen 24V und 45V beträgt.

10. Ein Kraftfahrzeug, insbesondere ein Mikro-Hybrid-Kraftfahrzeug, mit einem Verbrennungsmotor und einem Batteriesystem nach einem der vorhergehenden Ansprüche.

## Claims

1. A battery system for a motor vehicle comprising an internal combustion engine, the battery system at least having:
a starter circuit comprising a starter battery (10) and a starter (11) which is connected or can be connected to the starter battery (10) and is designed to start the internal combustion engine in response to a starter signal;
a low-voltage on-board electrical system comprising an on-board electrical system battery (15) which is designed to generate a first voltage and to output a first voltage to the low-voltage on-board electrical system, and at least one electrical consumer (14-2); and
an on-board electrical system with an increased voltage comprising at least one electrical generator (13-2) which can be operated by the internal combustion engine and is designed to generate a second voltage, which is higher than the first voltage, and to output a second voltage to the on-board electrical system with an increased voltage, wherein the on-board electrical system with an increased voltage is connected to the low-voltage on-board electrical system by means of a first coupling unit (16) which is designed to draw electrical energy from the on-board electrical system with an increased voltage and to supply electrical energy to the low-voltage on-board electrical system, and wherein the low-voltage on-board electrical system is connected to the starter circuit by means of a second coupling unit (17) which is designed to draw electrical energy from the low-voltage on-board electrical system and to supply electrical energy to the starter circuit.

2. The battery system according to Claim 1, in which the starter battery (10) is and/or the on-board electrical system battery (15) is/are designed as a lithium-ion battery.

3. The battery system according to either of Claims 1 and 2, in which the on-board electrical system with an increased voltage has at least one high-power consumer (19), for example an electrical air-conditioning compressor, an electrical heating system or an electric motor.

4. The battery system according to one of the preceding claims, in which the at least one electrical consumer (14-2) of the low-voltage on-board electrical system is, for example, a music system, a navigation device or an electric window winder.

5. The battery system according to one of the preceding claims, having a diode (18), the anode of said diode being connected to the low-voltage on-board electrical system and the cathode of said diode being connected to the starter circuit.

6. The battery system according to one of the preceding claims, in which the on-board electrical system with an increased voltage has a buffer capacitor (20).

7. The battery system according to one of the preceding claims, in which the first coupling unit (16) and/or the second coupling unit (17) are DC/DC converters.

8. The battery system according to one of the preceding claims, in which the first voltage is between 10 V and 15 V.

9. The battery system according to one of the preceding claims, in which the second voltage is between 24 V and 45 V.

10. A motor vehicle, in particular a micro-hybrid motor vehicle, comprising an internal combustion engine and a battery system according to one of the preceding claims.

## Revendications

1. Système de batterie pour un véhicule automobile comprenant un moteur à combustion interne, le système de batterie présentant au moins :
un circuit électrique de démarreur avec une batterie de démarreur (10) et un démarreur (11) connecté ou pouvant être connecté à la batterie de démarreur (10), lequel démarreur est réalisé de manière à faire démarrer le moteur à combustion interne en réponse à un signal de démarrage ;
un réseau de bord basse tension avec une batterie de réseau de bord (15) qui est réalisée de manière à générer une première tension et à la fournir au réseau de bord basse tension, et avec au moins un consommateur électrique (14-2) ; et
un réseau de bord ayant une tension plus élevée avec au moins un générateur électrique (13-2) qui peut fonctionner par le biais du moteur à combustion interne et qui est réalisé de manière à générer une deuxième tension supérieure à la première tension et à la fournir au réseau de bord ayant une tension plus élevée,
le réseau de bord ayant une tension plus élevée étant connecté au réseau de bord basse tension par le biais d'une première unité d'accouplement (16), laquelle est réalisée de manière à prélever de l'énergie électrique du réseau de bord ayant une tension plus élevée et à l'acheminer au réseau de bord basse tension et le réseau de bord basse tension étant connecté au circuit électrique de démarreur par le biais d'une deuxième unité d'accouplement (17) qui est réalisée de manière à prélever de l'énergie électrique du réseau de bord basse tension et à l'acheminer au circuit électrique de démarreur.

2. Système de batterie selon la revendication 1, dans lequel la batterie de démarreur (10) et/ou la batterie de réseau de bord (15) sont réalisées sous forme de batterie lithium-ion.

3. Système de batterie selon l'une quelconque des revendications 1 ou 2, dans lequel le réseau de bord ayant une tension plus élevée présente au moins un consommateur de haute puissance (19), par exemple un compresseur électrique de climatisation, un système de chauffage électrique ou un moteur électrique.

4. Système de batterie selon l'une quelconque des revendications précédentes, dans lequel l'au moins un consommateur électrique (14-2) du réseau de bord basse tension est par exemple une installation de musique, un appareil de navigation ou un lève-glace électrique.

5. Système de batterie selon l'une quelconque des revendications précédentes, comprenant une diode (18), dont l'anode est connectée au réseau de bord basse tension et dont la cathode est connectée au circuit électrique de démarreur.

6. Système de batterie selon l'une quelconque des revendications précédentes, dans lequel le réseau de bord ayant une tension plus élevée présente un condensateur tampon (20).

7. Système de batterie selon l'une quelconque des revendications précédentes, dans lequel la première unité d'accouplement (16) et/ou la deuxième unité d'accouplement (17) sont des convertisseurs CC/CC.

8. Système de batterie selon l'une quelconque des revendications précédentes, dans lequel la première tension est comprise entre 10 V et 15 V.

9. Système de batterie selon l'une quelconque des revendications précédentes, dans lequel la deuxième tension est comprise entre 24 V et 45 V.

10. Véhicule automobile, en particulier véhicule automobile micro-hybride, comprenant un moteur à combustion interne et un système de batterie selon l'une quelconque des revendications précédentes.
